Europäisches Patentamt

European Patent Office

Office européen des brevets

(11) Publication number: 0 399 786
A2

# EUROPEAN PATENT APPLICATION

(21) Application number: 90305549.9

(22) Date of filing: 22.05.90

(51) Int. Cl.⁵: **C25C 3/08, C25C 7/00, F27D 1/00, C04B 35/18, C04B 35/68**

(30) Priority: 25.05.89 CA 600673

(43) Date of publication of application:
28.11.90 Bulletin 90/48

(84) Designated Contracting States:
**DE ES FR GB IT**

(71) Applicant: **ALCAN INTERNATIONAL LIMITED**
**1188 Sherbrooke Street West**
**Montreal Quebec H3A 3G2(CA)**

(72) Inventor: **Allaire, Claude**
**207 Colbert**
**Chicoutimi-Nord, Quebec G7G 1L6(CA)**

(74) Representative: **Wilkinson, Stephen John et al**
**c/o Stevens, Hewlett & Perkins 5 Quality**
**Court Chancery Lane**
**London WC2A 1HZ(GB)**

(54) **Refractory linings capable of resisting sodium and sodium salts.**

(57) Refractory linings (28) for use in containers (20) which contact sodium or sodium salts at high temperatures and containers (20) provided with such linings, e.g. reduction cells and furnaces. The linings comprise three layers (29, 30 and 31) at least after an initial period of use. The first layer (29) is made of aluminosilicate material having an alumina:silica ratio of at least 0.85 and a porosity of about 25% or less. The second layer (30) is made of an aluminosilicate material having an alumina:silica ratio of at least 0.85 and a porosity in the range of about 25-50%. The third layer (31) is of highly insulating refractory material adjacent to an outer wall (22) of the container having a porosity of more than about 50%. The aluminosilicate used for one or more of the layers may be self-densifiable or non-self-densifiable calcined red mud. The linings resist degradation by the sodium or sodium salts while providing good thermal insulation.

FIG. 2

## Refractory linings capable of resisting sodium and sodium salts

This invention relates to refractory linings capable of resisting both high temperatures and exposure to sodium or sodium salts. More particularly, although not exclusively, the invention relates to refractory linings suitable for aluminum reduction cells and other similar containers.

Aluminum reduction cells usually consist of a shallow container for holding a molten electrolyte (normally a mixture of cryolite and alumina) while current is passed through the electrolyte to liberate metallic aluminum. The cell is provided with an electrically conductive lining (usually made of amorphous carbon or graphite) which acts as the cathode and with carbon anodes which dip into the bath of electrolyte from above. One or more layers of refractory materials are normally provided between the cathode and the wall of the container (the outer shell) in order both to protect the outer shell from attack by the cell contents and to provide thermal insulation.

In a typical cell design, the refractory lining consists of two distinct regions. One or more layers of highly insulating refractories are provided adjacent to the outer shell in order to provide the required thermal resistance. However, the insulating refractories are highly porous and are subject to rapid attack by the cell contents if the molten contents penetrate into this region. To prevent such penetration, there are usually one or more layers of dense (low porosity) refractories immediately beneath the cathode. While these dense materials do not have good thermal insulation properties, they serve to protect the lower insulating layers from the molten cell contents. The refractory materials used for the protective parts of the cell lining should be resistant to attack by the cell contents at the elevated operating temperatures (generally 900-950°C immediately below the cathode) in order to reduce the frequency of lining replacement and thus to increase the operational life of the cell.

Many materials and structures have been suggested for potlinings, but the most common lining structure consists of one or more layers of medium duty firebricks immediately beneath the cathode, one or more layers of insulating bricks next to the medium duty firebricks and possibly a highly insulating (often fibrous) slab next to the cell outer shell. Medium duty firebricks are aluminosilicate refractories having an alumina to silica ratio of about 0.67 and a relatively low porosity usually below 25%. These low porosity firebricks serve as the protective layer to prevent penetration of the molten cell contents into the more porous and more highly insulating underlying layers that are subject to rapid attack by the cell contents.

Despite the use of such refractory structures, cell linings are still attacked and degraded more rapidly than would be desired, resulting in the possible need for frequent cell shutdown and repair. Attempts to improve cell linings have generally concentrated on ways of reducing the porosity of the protective firebrick layer so that penetration by the molten cell contents can be minimized. However, the durability of cell linings has not been increased to the desired extent and there is thus a need for refractory materials and lining structures that can better resist the high temperatures and corrosive materials encountered during the operation of aluminum reduction cells and other equipment that is subject to high temperatures and exposure to sodium or sodium salts.

We have found that the porosity of the protective refractory layer may not be the most critical factor for a durable refractory lining. This appears to be the case because even the lowest porosity conventional aluminosilicate refractories seem to lose their high temperature resistance after a period of operation and parts of the lining begin to deform or melt. We believe that this is due to absorption of sodium and/or sodium salts into the crystalline structure of the refractory (by diffusion through the carbon cathode) to produce eutectics having melting points below the operating temperatures of the cell linings. In aluminum reduction cells, the molten electrolyte contains NaF (cryolite) and by reaction with the aluminium metal pad this salt may partially be reduced to metallic sodium, which is especially aggressive. In any event, we have found that an analysis of used cell refractories demonstrates that the content of $Na_2O$ in the refractories increases with the operational period of the cell (e.g. in one case, after 2000 days of service, the $Na_2O$ content of insulating bricks was found to have increased by 23 wt %). At the same time, however, the fluorine content is found to increase very little (e.g. less than about 1.5 wt %). Such sodium infiltration has been found to result in the conversion of the firebricks and insulating bricks into glassy phases, resulting in deformation and loss of insulating properties.

Accordingly, an object of the present invention is to provide a refractory lining for a container subject to high temperatures and exposure to sodium or sodium salts, which lining is capable of providing good resistance to attack by the sodium or sodium salts, while also having desirable physical and thermal characteristics.

Another object of the invention, at least in preferred forms, is to provide novel refractory materials suitable for use in the linings as mentioned above, and processes for producing such materials.

The present invention is based, at least in part, on the finding that aluminosilicate refractories having alumina to silica ratios of 0.85 or higher do not form low melting eutectic mixtures or compositions when exposed to sodium or sodium salts (particularly NaF) and thus do not melt or deform when exposed to such materials at high operating temperatures (e.g. up to about 915°C). Consequently, refractories of this type are much more durable than conventional materials when used as the outer parts of linings for aluminum reduction cells and in similar applications. It has also been found that such aluminosilicate materials having a range of porosities, and thus liquid penetrabilities and heat conductivities, can be obtained and so a durable refractory lining can be produced, made up of various layers of such materials in the regions exposed to the corrosive elements together with conventional highly insulating refractory materials, for their good insulating properties, in other parts of the lining.

Thus, according to one aspect of the present invention, there is provided a container having an internal volume for containing molten sodium or sodium salts at high temperature, said container comprising an outer wall and a refractory lining separating said internal volume from said outer wall, wherein said refractory lining comprises a first layer of an aluminosilicate refractory material having an alumina:silica ratio of at least 0.85 by weight and a porosity of 25% or less, a second layer of an aluminosilicate refractory material having an alumina:silica ratio of at least 0.85 by weight and a porosity of about 25-50%, said second layer lying beneath said first layer closer to said outer wall, and a third layer of insulating refractory material beneath said second layer closer to said outer wall, said insulating layer having a porosity of more than about 50%.

Incidentally, the term "aluminosilicate refractory material" as used herein is intended to include so-called "pure" alumina refractories. Commercial grade alumina always has a small amount of $SiO_2$ as an impurity and it is common practice in the art to include "pure" $Al_2O_3$ with aluminosilicates.

Other intervening layers of refractory material may be provided, if desired, but the three layers mentioned above are preferably used alone beneath a conductive carbonaceous layer (if required). If other refractory layers are present, they should not disrupt the intended function of the three basic layers, i.e. the three basic layers should be positioned within the parts of the cell lining which expose them to the temperatures at which and environments in which they are intended to function, as will be more apparent from the description provided later.

The alumina:silica ratios of the refractories used for the first and second layers are preferably at least 1.2 by weight, at least in some forms of the invention.

We have also unexpectedly found that aluminosilicate aggregates having the required high alumina to silica ratios for use in the first and second layers mentioned above can be produced from red mud (the byproduct produced by the extraction of alumina from bauxite according to the Bayer process) and that such materials not only form durable potlinings and the like, but can also be produced inexpensively since red mud is often discarded as waste, thus overcoming the disadvantage of the high cost of known aluminosilicate refractories of high alumina content.

Thus, according to another aspect of the invention, there is provided a process for producing a particulate refractory aluminosilicate material having an alumina:silica ratio of at least 0.85 by weight, which process comprises drying red mud derived from the Bayer process of extracting alumina from bauxite, calcining said red mud and crushing the calcined product to form particles.

The invention also relates to the refractories produced by this process and to containers lined with such refractories.

We have still further found that certain aluminosilicate materials having alumina to silica ratios below 0.85 are extremely useful as highly insulating refractories for use in the highly insulating (third) layers of the linings of the present invention. While these materials have low resistance to corrosion by sodium and sodium salts, they can be positioned within the parts of the cell lining that are not subject to such attack (e.g. the parts of the lining that are beneath dense protecting layers and subject to temperatures below about 700°C). The preferred materials are compressible fibre-based or mica-based materials that, although they are of low density, have relatively little change of thermal insulation value when compressed. A procedure for identifying such materials has been devised.

Thus, according to yet another aspect of the invention, there is provided a process for selecting an insulating refractory material for use in a lining for a container for containing sodium or sodium salts at high temperature, said process comprising the steps of: (a) selecting a range of product thermal conductivities having a 20% variation of the values in each range; (b) identifying different insulating products whose room temperature thermal conductivities fall within one of said selected ranges; (c) measuring the percentage loss of room temperature thermal conductivity of all said identified products after compression at 40% of their initial thickness, (d) rejecting all products having a change of thermal conductivity at 40% compression that is higher than a minimum value of said products by at least 20% leaving remaining products, and (e) using one of said remaining products as said insulating refractory material.

The invention and the preferred embodiments thereof are described in more detail in the following disclosure with reference to the accompanying drawings, in which:

Figure 1 is a ternary phase diagram showing the properties of compositions containing $Al_2O_3$, $SiO_2$ and $Na_2O$, the shaded region in the phase diagram showing the compositions which melt at temperatures of 732-760°C, whereas the unshaded regions showing compositions which melt at significantly higher temperatures; and

Fig. 2 is a cross-section of a cell potlining incorporating layers of refractory materials according to the invention; and

Fig. 3 is a cross-section of a typical aluminum reduction cell showing the position of the linings of the present invention.

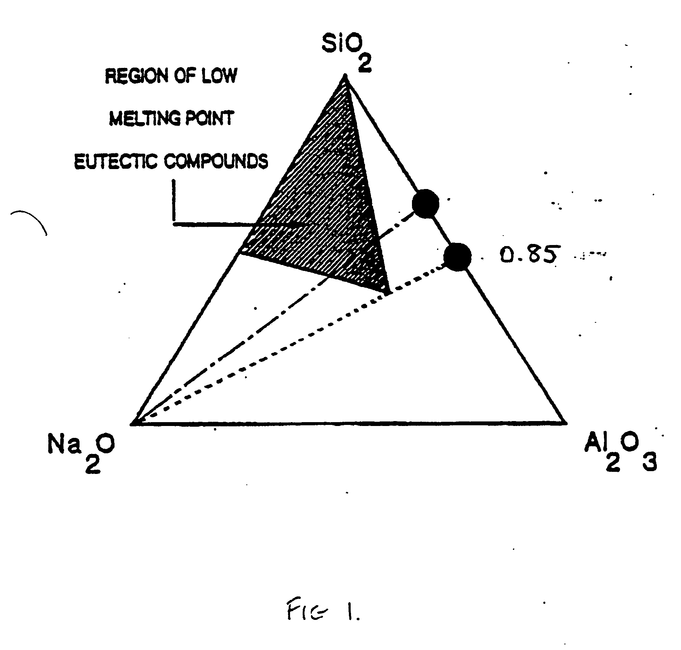

In the $Na_2O$-$Al_2O_3$-$SiO_2$ ternary phase diagram of Fig. 1, the shaded area shows those compositions which result in the formation of eutectic compounds having melting points above about 700°C (theoretically above 732°C). The unshaded areas represent compounds that do not melt at temperatures up to at least about 915°C. From the diagram, it can be seen that compositions having an alumina:silica ratio of 0.85 (as indicated by the dotted line) and higher do not form low melting eutectic compounds at any $Na_2O$ content and thus remain solid during the operation of a reduction cell even if sodium is absorbed into the crystal structure. In contrast, compounds having a lower alumina:silica ratio (e.g. medium duty firebrick as indicated by the chain-dot line) used in conventional cell linings remain solid as sodium is absorbed only until the shaded region is reached whereupon the compounds subject to temperatures above about 700°C begin to melt. As the upper layers of the refractory lining begin to melt, they flow down to the lower layers (e.g. the insulating bricks) which tend to have an even higher silica content (lower alumina:silica ratio) and thus form low melting eutectic compounds with the molten products. The liquid phases continue to move downwardly until the approximately 700°C isotherm is reached whereupon the liquid phases solidify, but not before the lining has been subjected to considerable deformation and damage so that hot spots may develop. Solid diffusion of sodium and/or salts into the lower refractories may also take place in those regions of the refractory lining subject to temperatures above 700°C. If this takes place, the lower refractory layers may themselves begin to melt even before they are contacted by the liquid phases from the upper layers and thus lining failure occurs even more rapidly.

In the present invention, aluminosilicate refractories having the high alumina:silica ratio required for sodium resistance are used for different parts of the cell linings according to their porosities. Refractories having porosities of less than about 25% are used as protective layers (to be used immediately beneath the cathode, if present, to prevent the penetration of cell contents). Refractories of this porosity do not have particularly good thermal resistance, so the layers should preferably be no thicker than required to produce the desired protection from the liquid cell contents. This thickness will vary from cell to cell and according to the conditions of use of any particular cell, but can easily be found by simple trial and experimentation.

Refractories having porosities in the range of 25-50% can be considered "intermediate" in that they represent a compromise between good resistance to penetration and good thermal insulation characteristics. These intermediate refractories can be used to prevent lower insulating layers from being subjected to temperatures above about 700°C and from being contacted by liquid cell contents, without unduly increasing the necessary thickness of the cell lining. A layer of such material is thus positioned between the dense protective layers and the highly insulating layers.

Aluminosilicate refractories with porosities higher than about 50% are considered to be insulating refractories and although they have good thermal insulation, they have poor resistance to the penetration of cell contents because of their high porosities. Furthermore, these materials almost always have alumina to silica ratios below 0.85 and thus have poor resistance to sodium and sodium salts. They should therefore only be used in parts of the refractory linings where they are subject to temperatures below about 700°C (e.g. adjacent to the outer shell of a reduction cell).

In view of the above, a preferred refractory lining structure according to the present invention consists of a layer of dense (<25% porosity) aluminosilicate material having an alumina to silica ratio of at least 0.85 by weight beneath the cathode of a reduction cell, a layer of intermediate porosity (25-50%) aluminosilicate material having an alumina to silica ratio of at least 0.85 by weight beneath the dense layer spanning the 700°C isotherm, and a highly porous (>50% porosity) insulating layer of aluminosilicate refractory having an alumina to silica ratio of less than 0.85 beneath the intermediate porosity layer to provide the desired thermal insulation of the cell wall.

The various layers used in the refractory linings may be either castable (where possible) or non-castable. Castable linings involve an aggregate, a binder and some water. Non-castable materials generally consist of an aggregate only (no binder or water). It has been found that the water content of refractories

4

must always be less than 5% by weight for safety before contact with molten aluminum takes place. If castable refractories are used, and if they contain more than 5% of water, drying to reduce the water content to below 5% must take place. This can be done prior to placement of the refractory in the reduction cell (or other container) or after prior to start-up (i.e. introduction of molten Al). To avoid in-cell drying, castable refractories may be preformed into bricks, tiles or other suitable shapes and treated to remove moisture to below 5% by drying or calcining prior to installation in the cell lining.

In order to provide the novel structures of the present invention, a number of known refractories have been evaluated for their suitability for use in the various parts of the linings of aluminum reduction cells or other containers exposed to similar harsh environments. First of all, aluminosilicate refractories having alumina to silica ratios of 0.85 or more were identified and then classified according to their porosities as suitable for use as protective (first) layers or as the intermediate (second) layers. While a large number of suitable known refractories exist, representative examples having suitable properties are shown in Tables 1 and 2 below.

TABLE 1

| REFRACTORIES SUITABLE FOR USE AS PROTECTIVE LAYERS | | | | |
|---|---|---|---|---|
| Products | A | B | C | D |
| Manufacturers | National Refractories | National Refractories | National Refractories | Pyrotek Co. |
| Room temp. therm.conductivity, w/m K | 1.64 | 1.64 | 2.56 | 1.29 |
| Porosity, % | 11.4 | 11.0 | 10.1 | 20.3 |
| Water Content wt. % | 4-5 | 4-5 | 4-5 | 5-10 |
| Chemical composition, wt. % | | | | |
| $Al_2O_3$ | 49.80 | 47.10 | 63.00 | 56.60 |
| $SiO_2$ | 45.30 | 45.80 | 31.40 | 34.80 |
| $Fe_2O_3$ | 0.87 | 1.15 | 1.10 | 1.09 |
| $Cr_2O_3$ | 0.02 | 0 | 0.02 | 0.01 |
| $P_2O_5$ | 0.19 | 0.36 | 0.10 | 0.08 |
| $TiO_2$ | 1.91 | 1.87 | 2.25 | 1.94 |
| CaO | 0.50 | 2.30 | 1.20 | 1.70 |
| MgO | 0.23 | 0.29 | 0.14 | 0.26 |
| $Na_2O$ | 0 | 0.10 | 0 | 0.10 |
| $K_2O$ | 0.52 | 0.38 | 0.06 | 0.09 |
| $Al_2O_3/SiO_2$ | 1.10 | 1.03 | 2.01 | 1.63 |
| Mineralogy Major * | Cristobalite ($SiO_2$) | Cristobalite ($SiO_2$) | Mullite ($Al_6Si_2O_{13}$) | Mullite ($Al_6Si_2O_{13}$) |
| Medium * | Mullite ($Al_6Si_2O_{13}$) | Mullite ($Al_6Si_2O_{13}$) | Corundum ($\alpha$-$Al_2O_3$) | - |
| " | Corundum ($\alpha$-$Al_2O_3$) | - | - | - |

* In respect to the relative peaks intensity recorded on the X-ray patterns.

Table 2

| REFRACTORIES SUITABLE FOR USE AS INTERMEDIATE LAYERS | | | | |
|---|---|---|---|---|
| Products | VCXSO | VCXS | VC2XB | VC2XO |
| Manufacturers | Pyrotek Co. | Pyrotek Co. | Pyrotek Co. | Pyrotek Co. |
| Room temp. therm.conductivity, w/m ˙K | 0.85 | 0.63 | 0.57 | 0.67 |
| Porosity, % | 37.5 | 44.2 | 41.3 | 40.3 |
| Chemical composition, wt. % | | | | |
| $Al_2O_3$ | 29.70 | 34.30 | 34.90 | 33.10 |
| $SiO_2$ | 30.30 | 21.50 | 23.80 | 27.40 |
| $Fe_2O_3$ | 4.14 | 2.28 | 3.31 | 4.18 |
| $Cr_2O_3$ | 0.03 | 0 | 0 | 0.02 |
| $P_2O_5$ | 0.06 | 1.93 | 2.14 | 0.05 |
| $TiO_2$ | 0.29 | 0.26 | 0.31 | 0.28 |
| CaO | 11.30 | 15.50 | 16.20 | 11.50 |
| MgO | 5.78 | 1.37 | 1.61 | 6.71 |
| $Na_2O$ | 0.70 | 0.80 | 0.70 | 0.60 |
| $K_2O$ | 0.81 | 0.71 | 0.88 | 0.81 |
| $Al_2O_3/SiO_2$ | 0.98 | 1.60 | 1.47 | 1.21 |
| Mineralogy Major * | Quartz ($SiO_2$) | - | N.D. (¹) | Quartz ($SiO_2$) |
| Medium * | Katoite [$Ca_3Al_2(OH)_{12}$] | Quartz ($SiO_2$) | N.D. (¹) | Forsterite ($Mg_2SiO_4$) |
| " | - | Katoite [$Ca_3Al_2(OH)_{12}$] | - | - |
| " | - | Gibbsite [$Al(OH)_3$] | - | - |
| " | - | Halloysite [$Al_2Si_2O_5(OH)_4.2H_2O$] | - | - |
| " | - | Feldspar ($NaAlSi_3O_8$) | - | - |

* In respect to the relative peaks intensity recorded on the X-ray patterns.
(¹) N.D. - Not determined.

The refractories shown in Tables 1 and 2 all have alumina to silica ratios greater than 0.85 by weight and can thus be used in those parts of the cell lining which are subject to attack by sodium or sodium salts, i.e. the parts of the lining which are exposed to temperatures above about 700˙ C.

All the refractories shown in Table 1 are castable. The A, B, and C materials have water contents below 5% and are thus suitable for use as castable (cast-in-place) shapes in a cell lining without treatment to remove water. The D material has a water content above 5%, hence precast shapes would need further drying or calcining to reduce the water content to below this level prior to installation in the lining.

In addition to the known aluminosilicate materials of the above types, it is also possible to use nepheline ore (a material generally used for glass making) in the parts of the lining subject to temperatures above 700˙ C. Nepheline ore has an alumina to silica ratio of at least 0.85 and is thus resistant to degradation.

When choosing materials for the highly insulating layer of the lining, the main criterion is the thermal insulation value of the material since there is no degradation of the material provided it is not subject to temperatures above 700˙ C. Various insulating materials are known. These generally fall into the categories of non-compressible materials (e.g. diatomite and perlite based products) and compressible materials (e.g. fibre and mica based products). The latter are desirable, but the operational cell life can be shortened if the thermal insulation value of the refractory is significantly decreased as the materials compress during use. We have accordingly devised a novel procedure for selecting optimal compressible insulators. The procedure involves the following steps.

(1) The first step involved is the selection of a range of product thermal conductivity, with respect to the specific pot cell (or other container) insulation required. Table 3 lists the various possible ranges of room temperature thermal conductivity that should be considered. In each range, the extent of variation between the values is limited to less than 20%.

TABLE 3

| REFERRED RANGES OF ROOM TEMPERATURE THERMAL CONDUCTIVITY | |
|---|---|
| RANGES | $\sigma$ * in W/m $^\circ$ K |
| 1 | $0.060 < \sigma < 0.070$ |
| 2 | $0.070 < \sigma < 0.080$ |
| 3 | $0.080 < \sigma < 0.095$ |
| 4 | $0.095 < \sigma < 0.110$ |
| 5 | $0.110 < \sigma < 0.130$ |
| 6 | $0.130 < \sigma < 0.150$ |

* $\sigma$ is the abbreviation referring to the thermal conductivity.

(2) The second step is to identify different products whose room temperature thermal conductivities fall in the previously selected ranges.

(3) The third step is to measure the percentage (%) gain of room temperature thermal conductivity of all the previously identified products after compression at 40% of their initial thickness, i.e. the value of the following expression: "▲$\sigma$th (40%)" (typical contraction of such products in a cell could generally fall between 25 to 50%). In contrast, non compressible materials tend to crush under the effect of compressive stress without decreasing their insulating characteristic). That measurement should preferably be made on 4 x 2½ x 1 inches samples, and the value of ▲$\sigma$th (40%) can be collected from a curve fitting of data corresponding to different contraction levels, varying from 0 to 50%.

(4) The last step involved is to reject all products of the group whose value of ▲$\sigma$th (40%) is higher than the minimum value obtained in that group by at least 20%. Two products having their value of ▲$\sigma$th (40%) not differing by more than 20% (based on the smaller number) should be considered technically equivalent. That limit is used because it corresponds to the extent of variation in the thermal conductivity ranges involved in the first step.

Some examples of compressible insulating products are given in Table 4, with their corresponding room temperature thermal conductivity and ▲$\sigma$th (40%) values.

TABLE 4

| EXAMPLES OF CALCIUM SILICATE- AND VERMICULITE-BASED INSULATING MATERIALS | | | | | |
|---|---|---|---|---|---|
| Product designation | A | B | C | D | E |
| Trade name | Super-therm 1000 | Insulite 1900 | Superex 2000 | | Vermiculite Type IV |
| | | | 1st version | 2nd version | |
| Manufacturers | Pyrotek | Simonsen | Manvile | | International Vermiculite |
| Room temperature thermal conductivity (W/m $^\bullet$ K) | 0.074 | 0.078 | 0.092 | 0.104 | 0.117 |
| $^*$ $\blacktriangle$σth (40%) | 15.5% | 21.4% | 36.2% | 41.3% | 26.7% |

$^*$$\blacktriangle$σth (40%) = % gain of the room temperature thermal conductivity of the product, after been compressed at 40% of its initial thickness.

Referring to Table 4, products A and B, and products C and D, respectively fall in the ranges of $0.070 < $σth$ < 0.080$ and $0.095 < σ < 0.110$ (in W/m $^\bullet$ K). Thus in each corresponding range, the two products can be compared based on their $\blacktriangle$σth (40%) values. For an application requiring an insulating material in the range of $0.07 < $σth$ < 0.08$, product B should be rejected because its $\blacktriangle$σth (40%) value is higher than that of product A, by more than 20%. If these two products were the only identified materials for that particular application, product A would be the material to use. In the range of $0.095 < σ < 0.110$, products C and D should be considered as equivalent materials because their value of $\blacktriangle$σth (40%) do not differ by more than 20% (based on the value of product C). Finally, product E cannot be compared to any of the other products because it is associated with a different range of thermal conductivity.

If, for some particular reasons, less accuracy is required for the pot insulation so that broader ranges of thermal conductivity than those referred in Table 3 are considered, the limit to use for rejecting the products from a selected group, based on their relative value of $\blacktriangle$σ (40%) should also be proportionally increased. For example, if products falling in the range of $0.06 < σ < 0.08$ (in W/m $^\bullet$ K) are considered as possibly equivalent materials, the corresponding rejecting limit to use should be 40% instead of 20%.

The above description relates to ways in which known or conventional materials can be selected for use in particular parts of the refractory linings of the present invention. The following description relates to novel aluminosilicate refractories having the desired alumina to silica ratio of 0.85 or greater which can be used in the high temperature parts of the lining structure and which can generally be produced less expensively than conventional high alumina materials.

As mentioned briefly earlier in this description, it has been found that a suitable novel high alumina refractory can be made from red mud, which is the well-known byproduct of the Bayer extraction of alumina from bauxite. The composition of red mud varies depending on the source of the bauxite and the processing conditions but red muds from all origins have alumina:silica ratios greater than 0.85 (and more usually >1) and can be used to form refractories if subjected to an appropriate conversion process explained below.

The analyses (on a dry weight basis) of some typical Bayer red muds are given in Table 5 below:

TABLE 5

| COMPONENT | Red Mud from mixed BOKE and TROMBETAS bauxite | Red Mud from from JAMAICAN bauxite | Red Mud from BOKE bauxite |
|---|---|---|---|
| | % by wt | % by wt | % by wt |
| $Al_2O_3$ | 20 | 12 | 20 |
| $Fe_2O_3$ | 33 | 48 | 24 |
| $TiO_2$ | 6 | 7 | 18 |
| $SiO_2$ | 17 | 5 | 7 |
| $Na_2O$ | 9 | 3 | 4 |
| CaO | 5 | 6 | 6 |
| Loss on ignition at 1000°C | 9 | 8 | 10 |
| Other | 1 | 11 | 11 |
| $Al_2O_3$:$SiO_2$ ratio (by weight) | 1.18 | 2.40 | 2.86 |

In order to form a suitable refractory material from red mud, particular process steps are carried out, including calcination, but the precise nature of these steps depends on the type of refractory material to be produced. After cooling, the calcined product is normally broken up into small pieces (if necessary) and the product is used as a non-castable refractory aggregate rather than a cast body or castable refractory.

Components in red mud include alumina, silica and soluble materials (expressed as $Na_2O$) such as NaOH, $Na_2CO_3$ and $Na_2SO_4$ which together are capable of forming a variety of complex compounds when the red mud is calcined. In order to vary the compounds formed, the relative proportions of these components can be changed by washing the red mud to remove soluble caustic compounds, by filtering the red mud to remove sand (particles of high silica content having a size greater than 65 Tyler mesh), or by adding various components (e.g. alumina or silica) usually in the form of -65 Tyler mesh particles. Different products can also be formed by varying the calcination temperature in conjunction with particular pre-treatment steps.

One of the main objectives of the treatment steps for the production of a first type of red mud refractory is to ensure that the components in the red mud react during the calcination step to produce primarily nepheline ($NaAlSiO_4$) as the major silicate compound since this material has an alumina silica ratio of 0.85 (according to its phase diagram). This can be achieved by adjusting (if necessary) the relative amounts of $Na_2O$, $Al_2O_3$ and $SiO_2$ in the red mud prior to the calcination step and by carrying out the calcination at a temperature above about 950°C to a maximum of about 1350°C. Thus washing or addition can be carried out prior to calcination to ensure that the ingredients of the red mud correspond to the stoichiometry of nepheline. In fact, it has been found that the refractory product has even better high temperature resistance to sodium compounds if it contains nepheline in the presence of excess alumina to the extent that the alumina:silica ratio exceeds 1.2.

Consequently, if the red mud has an alumina:silica ratio less than 1.2, sand may be removed prior to the calcination step, if this seems desirable.

It has furthermore been found that calcined red mud has the ability to self-densify when exposed to sodium salts at high temperatures (greater than about 830°C) if the $Na_2O$:$SiO_2$ ratio falls within a certain range. Self-densification appears to result from a filling of the pores of the product by sodium components. These sodium components then appear to become linked to the nepheline ($NaAlSiO_4$) matrix of the product and thus increase the density without causing any shrinkage.

Self-densification properties are extremely desirable for refractories used as the protective parts of cell linings, but are not so desirable for the insulating (intermediate) parts. For this reason, the ratio of $Na_2O$ to $SiO_2$ can be varied prior to the calcination step in order to produce either a self-densifiable product or a non self-densifiable product, as required.

The ability of the calcined products to self-densify depends on the value of R in the formula:

$$R = \frac{Na_2O \times S}{SiO_2}$$

wherein:

9

$Na_2O$ = the molar fraction of $Na_2O$ in the product originating from the decomposition of the soluble salts in the red mud during calcination;

$SiO_2$ = the molar fraction of free $SiO_2$ in the red mud product, i.e. silica originating as a mineral phase from the sand content of the mud and/or any silica-bearing additives;

S = the ratio of the specific surface area (SSA) of the calcined red mud particles to the maximum SSA value which is obtained from the -65 mesh material, i.e. S = 1 if 100% of -65 mesh particles are used, which is usually the case in the present invention.

Those products for which $0.05 < R < 1$ can achieve porosities of 15% or less upon exposure to solid cryolite at temperatures around 830°C or higher. In contrast, products of the invention having an R ratio of about 1 or more or of about 0 (i.e. less than 0.05) do not self-densify at any temperature.

In order to make the value of R equal to or greater than 1, the amount of $SiO_2$ and/or the amount of $Na_2O$ can be varied in the red mud before calcination. This can normally be done by:

(a) using unwashed high $Na_2O$ content red muds or by using low $Na_2O$ content red muds plus additives such as $Na_2CO_3$ and $Na_2SO_4$,

(b) removing silica (sand) from the red mud prior to calcination,

(c) a combination of (a) and (b).

The $Na_2O$ component of interest in red mud comes from the caustic content of the mud (i.e. the quantity of soluble sodiumbased materials, usually forming up to 10% by weight of the red mud on a dry basis, contributing to material basicity). The caustic content can be represented by the total titrable soda (TTS) in the red mud. The amount of $Na_2O$ in the calcined product is about 0.8 x TTS (i.e. 2.5% TTS gives a calcined product containing about 2.0% $Na_2O$). For self-densifiable products, therefore, the amount of silica should be greater than 0.8 x TTS or otherwise the value of R will be equal to or greater than 1. Free silica should thus be removed (as sand) from the red mud prior to calcination (if necessary at all) only to such an extent that the free silica content is still greater than 0.8 x TTS in those cases where a self-densifiable product is desired. Alternatively, the TTS could be decreased by washing the red mud to remove caustic sodium compounds from the red mud.

If substantially all of the sand in red mud is removed prior to calcination by filtration or other means, the amount of free silica remaining may fall too low to produce a selfdensifiable product. Sand removal at about 75% efficiency (the maximum economic rate of sand removal) generally confers an R ratio value to the calcined product of more than 1, which means that the calcined product does not self-densify at temperatures above about 830°C. Depending on the nature of the red mud starting material, sand removal at less than about 75% efficiency generally leads to R ratios less than 1 and thus to self-densifiable products. It may therefore be necessary either to remove just a portion of the sand by decreasing the efficiency of the sand removal step, or to add a suitable amount of a silica bearing material after efficient sand removal has taken place. Examples of such silica-bearing additives are silica fumes, quartz dust, material sand, etc. This addition is preferably made before liquor removal and the size of the added particles should preferably be -65 Tyler mesh.

High efficiency sand removal can be achieved, for example, with a cyclone or a sand box separation device. Lower efficiency sand removal can be achieved, for example, by the use of screens having opening sizes in the range of around -20 +35 Tyler mesh and higher depending on the granulometry of the sand in the red mud. A typical granulometric distribution of sand in red mud is shown in Table 6 below, and appropriate screen sizes can be devised from this to give any desired efficiency of sand removal.

TABLE 6

| Fractions | Contents |
|---|---|
| (Tyler mesh) | (wt %) |
| + 10 | 14 |
| - 10 + 20 | 50 |
| - 20 + 35 | 25 |
| - 35 + 65 | 9 |
| - 65 | 2 |

Irrespective of the type of red mud involved, the sand content of the mud should normally be reduced to less than about 5% on a dry basis (red mud normally contains 3-22% by weight of sand on a dry basis) to produce calcined red mud aggregates which will not self-densify at temperatures above 830°C. To avoid the generation of excess silica during calcination and hence to produce good resistance to sodium and sodium salts, the maximum amount of tolerated sand in red mud after partial sand removal should be such that the overall $Al_2O_3$ to $SiO_2$ ratio is greater than 0.85:1 and preferably greater than 1.2:1.

Red mud with a sand content between about 5 wt % and the maximum value achieving an $Al_2O_3$:$SiO_2$ ratio of about 0.85:1 will exhibit good chemical resistance and self-densification after calcination when exposed to sodium compounds at temperatures above about 830°C.

It should be appreciated that some red muds already have a composition which, upon calcination, gives a self-densifiable product having an alumina:silica ratio of 0.85 or more, in which case prior treatment of the red mud to remove sand or caustic materials will not be necessary if a self densifiable product is required. Other muds may have compositions suitable for the formation of non self-densifiable products without prior treatments. A chemical analysis of a red mud prior to use in order to determine its caustic and free silica contents will thus indicate what, if any, treatments are required prior to calcination.

The above discussion has centered on how to make R more or less than 1 in order to produce a non self-densifiable or a self-densifiable product. However, as indicated earlier, non self-densifiable products can be produced by making R less than 0.05, i.e. about 0. This can be achieved by limiting the red mud calcination temperature to a maximum of 950°C, and preferably to a maximum of 925°C to form a second type of red mud refractory. Under such calcination conditions, the soluble salts present in the original red mud, such as NaOH, $Na_2CO_3$ and $Na_2SO_4$, do not decompose significantly during the calcination step, so that the $Na_2O$ in the expression for R takes on a value of 0. No nepheline is formed in the calcined material, but sodalite $((NaAlSiO_4.xH_2O)(Na_2CO_3, Na_2SO_4))$ is formed instead and this material is as resistant to sodium and sodium salts as nepheline since the basic nepheline structure $(NaAlSiO_4)$ is still present. The resulting refractories are non-densifiable (i.e. they undergo less than 10% reduction in porosity) regardless of the sand and caustic contents of the red mud. They also have the advantage that the sand content in the original red mud does not necessarily have to be reduced to less than 5% by weight to achieve non-densifiable aggregates. The resulting products should preferably, however, not be used in applications where the temperature exceeds about 950°C.

It is also found that calcination carried out at the low temperatures indicated above reduces the amount of sintering of the red mud because of the reduced temperature and the reduced content of $Na_2O$ from the soluble salts. This lack of sintering maximizes the porosity of the aggregate and thus minimizes the thermal conductivity. The resulting products, which may have thermal conductivities as low as 0.10 W/m°C, are useful as the intermediate (second) and/or the insulating (third) layer(s) of the linings of the present invention.

For the refractories required to have values of R less than 0.05, the preferred calcination temperature is 850 to 925°C. At temperatures above 850°C, the combined water in the red mud is totally removed so the resulting refractory is suitable for use in reduction cells. However, it has been found that lower calcination temperatures can be employed, if desired, for the production of aggregates having good thermal insulation properties and non-densification properties. Calcination at any temperature below 850°C, after complete drying at about 100°C (preferably between 110 and 120°C) results in suitable products. The uncombined water in the mud is completely removed after drying, and the calcined product contains an acceptable fraction of the original combined water content of the mud (generally up to 15-20%, on a dry basis, and more usually less than 10%), varying from 1 to 0% as the calcination temperature is raised from 100 to 850°C.

In the case of the refractory materials intended to have a value of R greater than 0.05, the calcination step is carried out, following initial drying, at a temperature of approximately 950-1350°C (although temperatures as low as 850°C may sometimes be suitable) for a period of time sufficient to convert the mud to a suitable refractory crystalline structure (usually a minimum of 5 to 10 hours and often much longer, e.g. 30 hours or more). In more details the calcination results in the removal of combined water from the red mud solids and the modification of the Bayer Sodalite (the compounds of $Al_2O_3$, $SiO_2$ and $Na_2O$) to produce mainly nepheline. More preferably, the calcination temperature is between 1000-1200°C in order to develop adequate strength levels to achieve, upon crushing, aggregates involving a sufficient amount of coarse particles and minimum amounts of fines (to minimize problems of handling dust). When producing densifiable red mud aggregates, higher calcination temperatures (within the 850-1350°C range) achieve higher densification levels. It has also been found that densification levels increase for aggregates made from red mud containing higher caustic (TTS) contents. It has furthermore been found that exposure of densifiable red mud aggregates to sodium compounds at temperatures above 830°C will induce higher densification levels if it takes place under an oxidizing atmosphere (e.g. air).

After calcination, the product is normally subjected to gentle crushing to produce an aggregate having particles of preferably -0.25 Tyler mesh and more preferably of -4 Tyler mesh, although other particle sizes and combination of size ranges could be employed. A mixture of the following fractions is particularly preferred for the protective layer, namely -4 +10, -10 +28, -28 +65, and -65 Tyler mesh. Generally, the particles should preferably be of such a size and shape that a dense bed of minimum intergranular porosity can be produced by compacting a layer of the particles.

The effect of the granulometric distribution of the non self-densifiable red mud aggregates (normally used as the intermediate and/or insulating layer) on their thermal conductivity is negligible because the grains themselves are highly porous and thus most of the free space is formed by the pores in the grains rather than the spaces between the grains. For example, after calcination at $1100^\circ$C, the porosity of the grains is around 30-40%.

In view of the above, it is possible to design a cell potlining using only known refractory materials, only non-castable refractory aggregates produced from red mud or a combination of the two.

Moreover, since some of the red mud refractories of the present invention are self-densifiable, it is possible initially to provide a cell (or other container) with a two-layer lining comprising a highly insulating layer of greater than 50% porosity adjacent to the outer shell and a medium density (25-50% porosity) self-densifiable red mud refractory layer adjacent to the interior of the cell. During use, the outer region of the medium density layer self-densifies to produce a high density layer (less than 25% porosity). If the medium density layer is sufficiently thick to avoid all of the layer becoming self-densified, the result is a three layer structure required by the present invention. The $830^\circ$C isotherm forms the dividing line between the high density layer and the medium density red mud layer of the red mud refractory because self-densification does not take place below $830^\circ$C. Such an arrangement forms part of this invention.

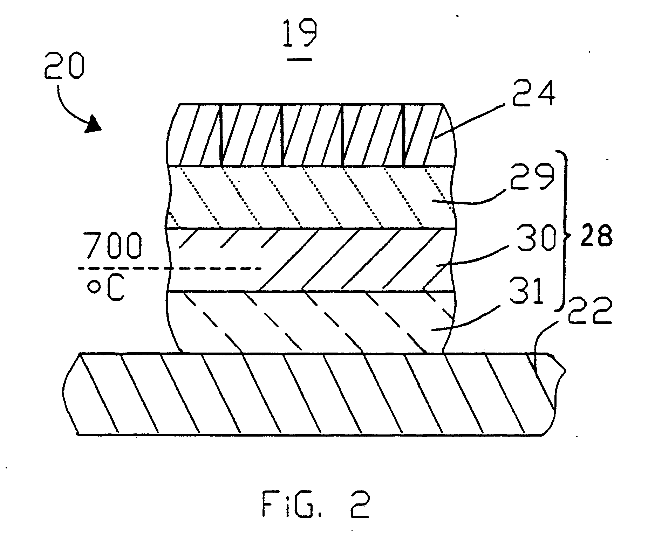

The structure of a typical cell lining according to the present invention is shown in Fig. 2.

The structure shown in Fig. 2 consists of a carbonaceous cathode 24 and an outer shell 22 separated by a refractory lining (28) made up of layers. The refractory layer 29 immediately beneath the cathode 24 is a low porosity (less than 25%) aluminosilicate material having an alumina to silica ratio of greater than 0.85. The refractory layer 30 is a medium porosity (25-50%) alumino-silicate material having an alumina to silica ratio greater than 0.85. The lowermost layer 31 is a compressible aluminosilicate insulating refractory having a low alumina:silica ratio and a low change of thermal conductivity with compression chosen according to the procedure mentioned above. The $700^\circ$C isotherm passes through layer 30 so that the insulating material of layer 31 is subjected to temperatures below $700^\circ$C and is therefore not degraded by the sodium compounds.

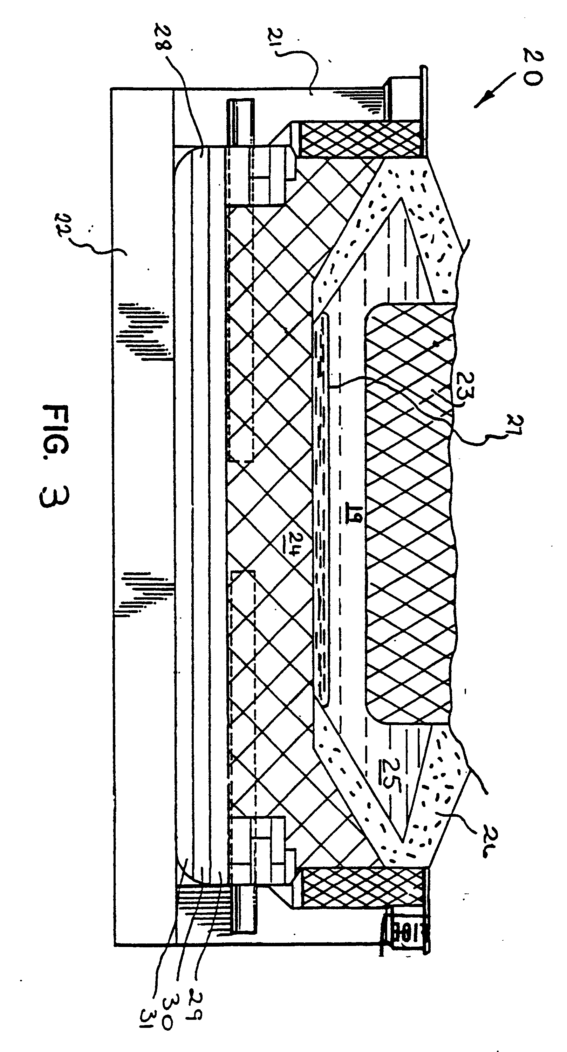

Fig. 3 shows a cross-section of a typical reduction cell used for the manufacture of aluminum having a lining similar to that shown in Fig. 2. The cell 20 has an outer shell 21, including a bottom wall 22, a carbon anode 23 and a carbon cathode 24. The cell has an internal volume 19 which contains a molten electrolyte 25 (cryolite) which freezes at the sides and top of the cell to form a solid crust 26. A molten aluminum pad 27 forms on the cell floor as the electrolysis progresses. Between the cathode 24 and the bottom wall 22, a refractory structure 28 is provided. The refractory structure 28 comprises at least one layer 29 of high alumina content (alumina:silica ratio >0.85) and one or more other layers 30 and 31, e.g. forming a structure according to Fig. 2.

The above description relates primarily to the use of refractory structures in aluminum reduction cells. However, the same refractory structures are useful in any containers that have interior walls likely to come into contact with molten sodium or sodium salts at temperatures in the range of 700 -950$^\circ$C. For example, the refractory structures can be used as linings for various furnaces and other types of reduction cells.

The present invention is illustrated in further detail with respect to the following Examples.

## Comparative Example 1

This Example shows that conventional potlining refractories (those having an $Al_2O_3$ to $SiO_2$ below 0.85 (in wt.) convert to glassy (or liquid) phases at above about $700^\circ$C by the action of sodium diffusing compounds in an alumina reduction cell.

After around 2000 days operation of a cell working at 275 KA, samples of the potlining refractories were observed and analyzed. The protective layer of medium duty refractories and part of the underlying diatomaceous-based insulating bricks were dark and they looked like glass. The "glassified" (or corroded) part of the insulating bricks was analyzed by XRD and XRF. Results are shown in Table 8.

TABLE 7

| CHEMICAL AND MINEROLOGICAL COMPOSITION OF CORRODED INSULATING BRICKS FROM A 275 KA POT CELL | | |
|---|---|---|
| | unused insulating bricks | corroded insulating bricks |
| Chemical Composition, Wt % | | |
| $Al_2O_3$ | 8 | 9.5 |
| $SiO_2$ | 71 | 57.6 |
| $Fe_2O_3$ | 7 | 9 |
| $Na_2O$ | 0.64 | 23.4 |
| F | 0 | 1.5 |
| $Al_2O_3/SiO_2$ | 0.11 | 0.16 |
| Minerological Composition | | |
| $SiO_2$ | YES | NO |
| $NaAlSiO_4$ | NO | YES |
| FeSi | NO | YES |
| Amorphous | NO | YES |

Referring to those results, the presence of FeSi in the corroded sample is explained by the reduction of $Fe_2O_3$ and $SiO_2$ in the original material, from the diffusing metallic sodium through the cathode blocks, which is generated by the following equation at the bath/metal interface.

$3NaF + Al = 3Na + AlF_3$

In the $Na_2O$ - $Al_2O_3$ - $SiO_2$ phase diagram, the composition of the corroded sample falls in the $Na_2SiO_3$ - $NaAlSiO_4$ - $SiO_2$ subtriangle which involves eutectic compounds melting at above $732^\circ$ C. This is confirmed by the presence of $NaAlSiO_4$ and amorphous compounds in that sample, which were detected from XRD analysis. The powder used for that analysis was finally put into a furnace to determine the melting point. Results confirm the low melting point of that corrosion product between 700 and $800^\circ$ C.

## COMPARATIVE EXAMPLE 2

This Example shows that the conditions for transforming conventional potlining refractories into glassy phases (or liquid) are achieved, with time, irrespectively of the cells amperage.

After more than 1900 days operation of a cell working at 60KA, samples of corroded medium duty firebricks, used as the protective barrier were analyzed by XRF. The results are given in Table 8.

Referring to the $N_2O$ - $Al_2O_3$ - $SiO_2$ phase diagrams the composition of the corroded sample also falls in the $Na_2SiO_3$ -$NaAlSiO_4$ - $SiO_2$ sub-triangle where the low melting point eutectic compounds (> about $700^\circ$ C) are present.

13

TABLE 8

| CHEMICAL COMPOSITION OF CORRODED MEDIUM DUTY FIREBRICKS FROM A 60KA POT CELL | | |
|---|---|---|
| Chemical Composition, Wt. % | Unused Refractory bricks | Corroded Refractory bricks |
| $Al_2O_3$ | 38 | 25 |
| $SiO_2$ | 58 | 50 |
| $Na_2$ | 0 | 18 |
| $Al_2O_3/SiO_2$ | 0.66 | 0.50 |

## COMPARATIVE EXAMPLE 3

This Example shows that the deterioration of the potlining refractories by the mechanisms discussed previously could take place during early cell life.

After only 300 days of operation of a cell working at 275 KA, potlining bricks were observed and exhibited a dark glazing (or glass) similarly to Comparative Example 1. That behaviour was clearly apparent for both medium duty firebricks and diatomaceous-based insulating bricks. The difference with the case discussed in Comparative Example 1 was that the corroded zones were localized nearer the cathode.

## COMPARATIVE EXAMPLE 4

This Example shows that the thermal conductivity of potlining refractories is significantly increased after their transformation into glassy phases.

The corroded sample of the insulating bricks in Comparative Example 3 was tested for its room temperature thermal conductivity. Based on the value obtained from the unused material, the thermal conductivity of the corroded insulating bricks had increased by at least 6 times.

## EXAMPLE 1

This Example shows that refractories having an $Al_2O_3$ to $SiO_2$ ratio higher than 0.85 (by wt.) do not convert to glassy phases at normal potlining cells temperature (between 900-950° C below the cathode blocks), when exposed to sodium compounds.

This was verified by testing refractory samples in a 60 wt % cryolite - 40 wt. % NaF mixture (which melts at 888° C) for 24 to 96 hrs, at temperatures between 830 to 885° C (at those temperatures the cryolite mixture is in the solid state). The $Al_2O_3$ to $SiO_2$ ratios of the tested materials are given in Table 9. While materials "A" and "B" always converted into glassy phases, which were characterized by the presence of $NaAlSiO_4$ and amorphous compounds from XRD analysis such as in Comparative Example 1, Material "C" ($Al_2O_3$ to $SiO_2$ ratio of 1.2 (12 by wt.)) never showed such transformation. XRD analysis on that material after testing revealed the presence of NaF but no amorphous compounds.

14

TABLE 9

| COMPOSITION OF THE TESTED MATERIALS FOR THEIR RESISTANCE TO SOLID CRYOLITE | | | |
|---|---|---|---|
| MATERIALS | A | B | C |
| $Al_2O_3/SiO_2$ (by wt.) | 0.1 | 0.7 | 1.2 |

## EXAMPLE 2

This Example shows the effect of caustic content (TTS) and temperature of calcination on the specific surface area (S.S.A.) of red mud aggregates. Four different fractions of red mud aggregates, containing originally (on a dry basis), 2.5 wt % TTS (unwashed red mud) or 0.5 wt % TTS (washed red mud), after calcination at 1000 or 1100°C in air for 24 hours have been submitted to S.S.A. measurements, using nitrogen gas. The results are given in Table 10.

Lower TTS content gives higher S.S.A. values. However, the increasement is much more pronounced when decreasing the temperature of calcination. Thus lower TTS contents and temperatures of calcination contribute to increase the red mud aggregate porosity and thus to reduce their thermal conductivity.

TABLE 10

| EFFECTS OF TTS CONTENT AND TEMPERATURE OF CALCINATION ON THE SPECIFIC SURFACE AREA ($M^2/G$) OF RED MUD AGGREGATES | | | | | |
|---|---|---|---|---|---|
| Temperature (°C) | TTS (wt %) | Fractions (Tyler mesh) | | | |
| | | -65 | -28 +65 | -10 +28 | -4 +10 |
| 1000 | 0.5 | 1.45 | 1.32 | 1.20 | 1.20 |
| | 2.5 | - | - | - | - |
| 1100 | 0.5 | 0.84 | 0.73 | 0.71 | 0.60 |
| | 2.5 | 0.75 | 0.62 | 0.57 | 0.40 |

## EXAMPLE 3

This Example shows that the granulometric distribution of calcined red mud aggregates do not significantly affect their thermal conductivities. Starting from unwashed red mud followed by calcination at 1100°C for 40 hours, in air, two granulometric distributions of aggregates were prepared and then submitted to room temperature thermal conductivity measurements. The results are given in Table 11. Both distributions, while involving either high amount of fines or coarse particles, have the same thermal conductivity if considering the standard deviation obtained from the six samples tested in both cases.

TABLE 11

| EFFECTS OF THE GRANULOMETRIC DISTRIBUTION OF CALCINED RED MUD AGGREGATES ON THEIR THERMAL CONDUCTIVITY | | |
|---|---|---|
| Aggregates designation | A | B |
| Granulometric distribution (wt %) | | |
| - 4 + 10 Tyler mesh | 0 | 59 |
| -10 + 28 Tyler mesh | 0 | 33 |
| -28 + 65 Tyler mesh | 39 | 2.5 |
| -65 Tyler mesh | 61 | 6 |
| Room temperature thermal conductivity (W/m·C) | 0.22 ± 0.03 | 0.21 ± 0.01 |

## EXAMPLE 4

This Example shows that pure calcined red mud, if submitted prior to calcination to high efficiency sand removal, to reduce its sand content to less than around 5 wt % (on a dry basis) does not exhibit self-densification during exposure to sodium compounds.

Red mud containing around 15 wt % of sand (on a dry basis) was sand removed at an efficiency of more than 75%, and then washed to obtain around 0.5 wt % TTS (on a dry basis).

After calcination at 1000°C for five hours in air, followed by crushing, the -65 mesh fraction was mixed to 33 wt % water and then molded in a press at 4000 psi. The cylindrical test piece (diameter = 3.84 cm, height ~2.5 cm) obtained, was then fired at 1000°C for five hours in air, and then at 1000°C for five hours in nitrogen, before being finally exposed to a 40 wt % NaF - 60 wt % $Na_3AlF_6$ mixture at 880°C for four hours under nitrogen. At that temperature the cryolitic mixture was in the solid state (M.P. = 888°C). Density and porosity measurements carried out after and before the test gave the results given in Table 12.

Compared to the results given in reference 1 (see Example 1) where similar testing conditions were involved (at 880°C) on similarly treated red mud, but with the addition of 4 wt % silica fume binder, the extent of porosity drop obtained in the present case (after the test) is negligeable (20 times less than the reference value).

TABLE 12

| VARIATION OF DENSITY AND POROSITY OF PURE WASHED AND SAND REMOVED CALCINED RED MUD AFTER EXPOSURE TO A SOLID CRYOLITIC MIXTURE | | |
|---|---|---|
| | Density (g/cm³) | Porosity (%) |
| Before testing | 2.31 | 37.8 |
| After testing | 2.33 | 36.4 |
| % Variation | +0.87 | -3.70 |

## EXAMPLE 5

This Example is to show that pure calcined red mud, if submitted prior to calcination to partial sand removal, to fix its sand content at more than 5 wt % (on a dry basis) can self-densify when exposed to sodium compounds. Red mud containing around 2.5 wt % (on a dry basis) TTS and around 15 wt % (on a dry basis) of sand, was sand removed at an efficiency of around 50%, and then washed to obtain around 0.5 wt % TTS (on a dry basis). After calcination at 1100°C for forty hours in air, aggregates having the granulometric distribution shown in Table 13 with a corresponding $Al_2O_3$ to $SiO_2$ ratio of around 1.3 (in wt) were prepared and then tested in contact with sodium compounds under conditions similar to those encountered in cell potlinings.

After twenty-four hours testing in those conditions, at a temperature between 917 to 938°C, in nitrogen, the self-densification of the aggregates reached a level characterized by a loss of their porosity of around 70% (initial porosity = 56%).

TABLE 13

| GRANULOMETRIC DISTRIBUTION OF THE TESTED CALCINED RED MUD AGGREGATES | |
|---|---|
| Fractions | Content |
| (Tyler mesh) | (wt %) |
| - 4 + 10 | 52 |
| -10 + 28 | 22 |
| -28 + 65 | 9 |
| -65 | 17 |

## EXAMPLE 6

This Example is to show the effect of TTS content and temperature of calcination on the self-densification property of pure calcined red mud aggregates whose sand content after partial sand removal prior to calcination was above 5 wt % (on a dry basis).

The same red mud subjected to partial sand removal as in Example 5 was allowed to remain unwashed and the corresponding aggregates involving the granulometric distribution given in Table 13 were also calcined at 1200°C (for forty hours, in air) before being submitted to the same test procedure than before. The results are given in Table 14. Increasing the temperature of calcination and lowering the original red mud TTS content (by washing) have the effect of increasing the extent of self-densification of the red mud aggregates.

TABLE 14

| EFFECT OF TTS CONTENT AND TEMPERATURE OF CALCINATION ON THE SELF-DENSIFICATION PROPERTY OF PARTIALLY SAND REMOVED CALCINED RED MUD AGGREGATES (AFTER 24 HOURS AT 917-938°C, IN AIR) | | |
|---|---|---|
| Temperature (°C) | TTS (wt %) | % loss of porosity after densification |
| 1100 | 0.5 | 70 |
| | 2.5 | 55 |
| 1200 | 0.5 | >85 |
| | 2.5 | - |

## EXAMPLE 7

This Example shows the dependence of the extent of self-densification of calcined red mud aggregates (containing above around 5 wt % of sand) on the atmosphere present during densification.

The red mud aggregates produced as described in Example 5 were also tested, according to the procedure described earlier, under air and argon. The results are given in Table 15. The densification in order to proceed required oxygen and/or nitrogen from the surrounding atmosphere. An oxidizing atmosphere constitutes the best conditions. Under argon, densification does not proceed.

TABLE 15

| EFFECT OF THE ATMOSPHERE NATURE DURING SELF-DENSIFICATION OF CALCINED RED MUD AGGREGATES (AT 1100°C X 40 HOURS) | |
|---|---|
| Nature of the atmosphere | % loss of porosity after densification (at 917-938°C X 24 hours) |
| Argon | <2 |
| Nitrogen | 55 |
| Air | 73 |

## EXAMPLE 8

This Example is to show that non-densifiable high insulating red mud aggregates can be made by limiting the temperature during the calcination step of the process to a value in the range of 850 to 950°C, irrespective of the sand and TTS contents of the mud prior to calcination.

Two red mud samples having sand contents of around 15 Wt. % and TTS contents of 1.3 and 2.6 Wt. % (on a dry basis), respectively, were dried and then calcined at 850°C for 24 hours in air and finally crushed and screened to obtain aggregates having the granulometric distribution given in Table 16.

Each aggregates sample was then submitted to room temperature thermal conductivity and porosity measurements and finally tested in contact with sodium compounds under conditions similar to those encountered in cell potlinings. After twenty-four hours testing in nitrogen, at a temperature of around 930° C, the porosity of the sample was measured to determine the extent of their densification. The results are given in Table 17.

In the above conditions, red mud with a relatively high sand content, prior to calcination, was converted to non-densifiable aggregates (% loss of porosity < 10 %) having a thermal conductivity of around 0.10 W/m° C, irrespectively of the TTS content.

TABLE 16

| GRANULOMETRIC DISTRIBUTION OF THE TESTED CALCINED RED MUD AGGREGATES SAMPLES | |
|---|---|
| FRACTIONS | CONTENT |
| (TYLER MESH) | (WT %) |
| - 4 + 10 | 22 |
| -10 + 28 | 34 |
| -28 + 65 | 14 |
| -65 | 30 |

TABLE 17

| PROPERTIES OF AGGREGATES PRODUCED FROM RED MUD CONTAINING A HIGH SAND CONTENT PRIOR TO CALCINATION AT 850°C IN AIR | | | | |
|---|---|---|---|---|
| TTS CONTENT (WT.%) | SAND CONTENT (WT.%) | ROOM TEMPERATURE THERMAL CONDUCTIVITY (W/m·C) | POROSITY (%) | % LOSS OF POROSITY AFTER CONTACTING SODIUM COMPOUNDS AT 930°C FOR 24 HRS |
| 2.6 | 15 | 0.11 | 60 | 9.0 |
| 1.3 | 15 | 0.10 | 61 | 9.0 |

EP 0 399 786 A2

## EXAMPLE 9

This Example is to show that equivalent high thermal insulating aggregates can be produced from red mud, irrespectively of the temperature at which the later is calcined, in the range between around 100 to 850°C.

Different red mud samples were dried at 110°C for 48 hours and then calcined at 700 and 850°C for 24 hours, in air. After crushing and screening to achieve the granulometric distribution shown in Table 18, the samples were tested for their room temperature thermal conductivity.

As shown in Table 19, no significant difference of thermal insulating values were detected between the different cases investigated.

TABLE 18

| GRANULOMETRIC DISTRIBUTION OF THE TESTED CALCINED RED MUD AGGREGATES SAMPLES | |
| --- | --- |
| FRACTIONS | CONTENT |
| (TYLER MESH) | (WT %) |
| - 4 + 10 | 22 |
| -10 + 28 | 34 |
| -28 + 65 | 14 |
| -65 | 30 |

TABLE 19

| ROOM TEMPERATURE THERMAL CONDUCTIVITY OF AGGREGATES PRODUCED FROM RED MUD CALCINED BETWEEN 100 TO 850°C | |
| --- | --- |
| Calcination temperature (°C) | Thermal conductivity (W/m °C) |
| 110 | 0.12 ± 0.01 |
| 700 | 0.12 ± 0.01 |
| 850 | 0.11 ± 0.01 |

## Claims

1. A container having an internal volume (19) for containing sodium or sodium salts at high temperature, an outer wall (22) and a refractory lining (28) separating said internal volume from said outer wall, characterized in that said refractory lining (28) comprises a first layer (29) of an aluminosilicate refractory material having an alumina:silica ratio of at least 0.85 by weight and a porosity of about 25% or less, a second layer (30) of an aluminosilicate refractory material having an alumina:silica ratio of at least 0.85 by weight and a porosity of about 25-50%, said second layer (30) lying beneath said first layer (29) closer to said outer wall, and a third layer (31) of insulating refractory material beneath said second layer (30) closer to said outer wall, said insulating material having a porosity of more than about 50%.

2. A container according to Claim 1 characterized in that said aluminosilicate refractory material of said first and/or said second layer (29 and/or 30) has an alumina:silica ratio of at least 1.2 by weight.

3. A container according to Claim 1 or Claim 2 characterized in that said material of said first layer (29) has a water content of less than 5% by weight.

4. A container according to Claim 1, Claim 2 or Claim 3 characterized in that said material of said second layer (30) has a water content of less than about 5% by weight.

5. A container according to any preceding claim characterized in that said first and second layers (29 and 30) have suitable thicknesses and thermal insulation values to ensure that said insulation material of said third layer (31) is subject to a temperature of less than about 700° C during use and is protected from sodium or sodium salts in said container.

6. A container according to any preceding claim characterized in that said material forming said first layer (29) is an aluminosilicate material selected from products A, B, C and D identified in Table 1 of the disclosure.

7. A container according to Claim 6 characterized in that product D is dried or calcined to reduce the water content to less than 5 wt. %.

8. A container according to any preceding claim characterized in that said material forming said second layer (30) is an aluminosilicate material selected from products VCXSO, VCXS, VC2XB and VC2XO identified in Table 2 of the disclosure.

9. A container according to any preceding claim characterized in that said insulating refractory material of said third layer (31) is a compressible material selected from calcium silicate-based materials and mica-based materials.

10. A container according to Claim 9 characterized in that said insulating refractory material of said third layer (31) is one selected by carrying out the following steps:

(a) selecting a range of product thermal conductivities having a 20% variation of the values in each range;

(b) identifying different insulating products whose room temperature thermal conductivities fall within one of said selected ranges;

(c) measuring the percentage loss of room temperature thermal conductivity of all said identified products after compression at 40% of their initial thickness,

(d) rejecting all products having a change of thermal conductivity at 40% compression that is higher than a minimum value of said products by at least 20%, leaving remaining products and

(e) using one of said remaining products as said insulating refractory material.

11. A container according to any preceding claim characterized in that said aluminosilicate material of said first and/or said second layer (29 and/or 30) is an aggregate produced by calcining red mud for a time sufficient to remove water therefrom and to produce a product resistant to sodium and/or sodium compounds.

12. A container according to Claim 11 characterized in that said aluminosilicate material of said first layer (29) is a self-densifiable red mud refractory.

13. A container according to Claim 12 characterized in that said aluminosilicate material of said second layer (30) is a self-densifiable, but non-self-densified, red mud refractory and said aluminosilicate material of said first layer (29) is the same red mud refractory which has undergone self-densification.

14. A container according to any preceding claim which is an aluminum production cell having an electrically conductive lining (24) for use as a cathode, characterized in that said refractory lining (28) is located between said electrically conductive lining (24) and said outer wall (22).

15. A container having an internal volume for containing sodium or sodium salts at high temperature, said container having an outer wall (22) and a refractory lining (28) separating said internal volume from said outer wall, characterized in that said refractory lining (28) comprises a first layer (29 and 30) of self-densifiable calcined red mud refractory having an alumina:silica ratio of at least 0.85 by weight and a porosity in the range of 25-50%, and a second layer (31) beneath said first layer (29 and 30) closer to said outer wall (22) of insulating refractory material having a porosity of more than 50%, said first layer (29 and 30) being sufficiently thick that, in use, an 830° C isotherm passes through said layer above a surface thereof which contacts said second layer (31) and in that said calcined red mud is capable of self-densifying to a porosity less than 25% when contacted with sodium or sodium salts at temperatures above 830° C.

16. A process for producing a particulate refractory aluminosilicate material having an alumina:silica ratio of at least 0.85 by weight, characterized in that said process comprises drying red mud derived from the Bayer process of extracting alumina from bauxite, calcining said red mud at a temperature up to 1350°C and crushing the calcined product to form particles.

17. A process according to Claim 16 characterized in that said red mud has an alumina:silica ratio of less than about 1.2, which process additionally comprises removing sufficient silica-containing sand from said red mud to raise said ratio to 1.2 or higher.

18. A process according to Claim 16 for producing a calcined product which self-densifies in the presence of sodium and/or salts at temperatures above about 830°C, characterized in that said process comprises calcining a red mud having a value of R of less than 1 but greater than 0.05, wherein:

$$R = \frac{Na_2O}{SiO_2} \times S$$

wherein:

$Na_2O$ = the molar fraction of $Na_2O$ in the product originating from the decomposition of the soluble salts in the red mud during calcination;

$SiO_2$ = the molar fraction of free $SiO_2$ in the red mud product;

S = the ratio of the specific surface area (SSA) of the calcined red mud particles to the maximum SSA value which is obtained from the -65 mesh material.

19. A process according to Claim 16 for producing a calcined product which does not self-densify in the presence of sodium salts at temperatures above about 830°C, characterized in that said process comprises calcining a red mud having a value of R of 1 or more, wherein

$$R = \frac{Na_2O}{SiO_2} \times S$$

wherein:

$Na_2O$ = the molar fraction of $Na_2O$ in the product originating from the decomposition of the soluble salts in the red mud during calcination;

$SiO_2$ = the molar fraction of free $SiO_2$ in the red mud product;

S = the ratio of the specific surface area (SSA) of the calcined red mud particles to the maximum SSA value which is obtained from the -65 mesh material.

20. A process according to Claim 16 for producing a calcined product which does not self-densify in the presence of sodium salts at temperatures above 830°C, characterized in that said process comprises calcining red mud at a temperature below 950°C, to impart to said red mud a value of R less than 0.05 wherein:

$$R = \frac{Na_2O}{SiO_2} \times S$$

wherein:

$Na_2O$ = the molar fraction of $Na_2O$ in the product originating from the decomposition of the soluble salts in the red mud during calcination;

$SiO_2$ = the molar fraction of free $SiO_2$ in the red mud product;

S = the ratio of the specific surface area (SSA) of the calcined red mud particles to the maximum SSA value which is obtained from the -65 mesh material.

21. A process according to Claim 18 or 19 characterized in that said red mud initially has a different value for R, and said value for R is adjusted prior to calcination of said red mud by at least one method selected from the group consisting of (a) reducing the value of $Na_2O$ by washing said red mud, (b) adding material which contribute to the $Na_2O$ value, (c) removing silica-bearing sand from the red mud, and (d) adding silica-bearing materials to said red mud.

22. A refractory aluminosilicate material having an alumina:silica ratio of at least 0.85 by weight characterized in that said material is produced by a process according to claim 16.

23. A refractory aluminosilicate aggregate having an alumina:silica ratio of at least 0.85 by weight and the ability to self-densify in the presence of sodium compounds at temperatures above about 830°C, characterized in that said aggregate is produced by a process according to Claim 18.

24. A refractory aluminosilicate aggregate having an alumina:silica ratio of at least 0.85 by weight and an inability to self-densify in the presence of sodium compounds at temperatures above about 830°C, characterized in that said aggregate is produced by a process according to Claim 19 or Claim 20.

25. A process for selecting an insulating refractory material for use in a lining for a container for containing sodium or sodium salts at high temperature, characterized in that said process comprises the steps of:

(a) selecting a range of product thermal conductivities having a 20% variation of the values in each range;

(b) identifying different insulating products whose room temperature thermal conductivities fall within one of said selected ranges;

(c) measuring the percentage loss of room temperature thermal conductivity of all said identified products after compression at 40% of their initial thickness,

(d) rejecting all products having a change of thermal conductivity at 40% compression that is higher than a minimum value of said products by at least 20%, leaving remaining products, and

(e) using one of said remaining products as said insulating refractory material.

REGION OF LOW

MELTING POINT

EUTECTIC COMPOUNDS

$SiO_2$

$Na_2O$

$Al_2O_3$

0.85

FIG 1.

FIG. 2

FIG. 3